# EUROPEAN PATENT APPLICATION

(11) **EP 4 715 203 A1**
(43) Date of publication of application: **25.03.2026**
(21) Application number: 25202612.5
(22) Date of filing: 16.09.2025
(51) Int. Cl.: F03D 80/40

(54) **DUCT SUPPORT SYSTEM FOR A WIND TURBINE BLADE**

(30) Priority: 18.09.2024 US 202463696180 P
(71) Applicant: FabricAir Canada Inc., Waterloo, ON N2V 1K4 (CA)
(72) Inventor: BAXTER, Dylan, N2V 1K4 Waterloo (CA); ROEPER, Daniela, N2V 1K4 Waterloo (CA); Vanegas, Rafael, N2V 1K4 Waterloo (CA); Fournier, Alexandre, N2V 1K4 Waterloo (CA)
(74) Representative: Humphrey-Evans, Edward John

(57) **Abstract**

Provided herein are duct support systems and methods for installing and supporting a flexible duct in an interior of a wind turbine blade. The system comprises a duct support including an eyelet and at least one bonding surface, wherein the bonding surface is glued to an interior surface of the wind turbine blade near a tip of the wind turbine blade, and a cable, wherein the cable is connected to a tip-most end of the flexible duct, the cable passes through the eyelet of the duct support, and the cable passes through the flexible duct, whereby the flexible duct can be retracted from or deployed to the tip of the wind turbine blade by pulling the cable in a respective direction.

## Description

### Technical Field

The embodiments disclosed herein relate to wind turbine subsystems, and, in particular to ice protection systems and methods for use in wind turbines. In particular, the present invention provides a duct support system for a wind turbine blade.

### Introduction

Wind resources for wind energy production may be located in cold, humid regions where ice may form on a blade of a wind turbine. Wind turbine blade icing may cause several problems for the operation of the wind turbine such as measurement error, prolonged power loss, mechanical failure, and safety hazards. Based on the profile of the blade, a critical area of icing may occur on the most distal third of the blade along the leading edge. The most distal third of the blade has the highest relative velocity and is therefore more likely to have ice buildup. Accordingly, it may be desirable to have a wind turbine blade ice protection system.

Conventional anti-icing systems may include the use of external coatings and paints. Further, conventional de-icing systems are often directly built into the blade during the manufacturing process of the blade. A retrofit of an existing blade involves a consideration of parameters such as energy, effect of additional mass of the system, and difficulty and cost of installation (as a retrofit). Further, installation costs are a factor to be considered for externally installed devices. Fluids and machines on the blade may alter the dynamics of the system, especially as mass moves closer to the tip. Adding an ice protection system to the exterior of the blade may result in losses in power generation due to changes in aerodynamic properties of the blade that may outweigh benefits of recaptured power after icing events. Additionally, the external ice protection systems are exposed to harsh environmental conditions and erosion due to air and airborne objects, requiring frequent maintenance to maintain effectiveness.

In the aviation industry, hot air systems are used as anti-icing systems and not as de-icing systems because the losses due to convection are significant at high airspeeds.

In wind turbines, conventional or existing approaches to ice prevention or removal may fall short due to exceeding the available electrical energy capacity. Additionally, in many cases conventional systems either cannot be installed in the wind turbine or are extremely costly to implement as a retrofit.

### Object to the Invention

The present invention seeks to provide an improved wind turbine blade ice protection system that may provide a retrofit to existing blades.

Accordingly, ice protection systems and methods for wind turbines are desired that overcome at least some of the disadvantages of existing techniques. In particular, the present invention seeks to provide an improved duct support system for a wind turbine blade.

### Statement of invention

Provided herein is a duct support system for installing and supporting a flexible duct in an interior of a wind turbine blade, the system comprising a flexible duct configured to receive a heated airflow and release the heated airflow into the interior of the wind turbine blade when installed, a duct support comprising: a wedge having an interior cavity configured to hold a volume of adhesive, and a plurality of adhesive channels connecting the interior cavity to an exterior of the wedge, wherein the exterior of the wedge includes at least one bonding surface, and a wedge insert having an eyelet, wherein the wedge insert is configured to fit into the interior cavity of the wedge and to interlock with the wedge, wherein in a first position within the interior cavity of the wedge the wedge insert does not apply pressure to the adhesive, and in a second position within the interior cavity of the wedge, the wedge insert applies pressure within the interior cavity to force the volume of adhesive through the adhesive channels, a push rod, to push the duct support, in the first position, to contact an interior surface at a tip of the wind turbine blade, and to move the wedge insert into the second position to force the adhesive through the adhesive channels to the exterior of the wedge to adhere the at least one bonding surface to the interior surface of the wind turbine blade, and a cable, wherein the cable is threaded through the eyelet of the wedge insert and through the flexible duct, wherein the cable is tied to the tip of the flexible duct, whereby after the duct support is adhered to the interior surface of the wind turbine blade, the flexible duct can be retracted or deployed by pulling the cable in a respective direction.

The system may further comprise at least one anchor disposed within the wind turbine blade to anchor the cable to the shear web of the wind turbine blade. The anchor may be disposed on a shear web. The cable may be a rope. The push rod may be further configured to interlock with the wedge insert. The push rod may twist the wedge insert to move the wedge insert from the first position to the second position.

The adhesive may be injected into the wedge through at least one opening, wherein after the adhesive is injected each opening of the at least one opening may be closed with a plug. The push rod may be formed from sections wherein sections are added and removed to change the length of the push rod.

The wedge may further comprise wedge positioning blocks, and the wedge insert may further comprise insert positioning blocks, wherein in the first position the wedge positioning blocks and the insert positioning blocks abut and prevent the wedge insert from applying pressure to the adhesive.

The wedge insert may further comprise a ledge with insert interlocking openings, wherein the insert interlocking openings allow the wedge insert to be inserted into the interior cavity over the wedge positioning blocks, and wherein the ledge and insert positioning blocks form a cavity into which the wedge positioning blocks insert to hold the wedge insert in the first position.

The wedge may have a tapered head wherein the wedge is smaller at a front end, wherein the front end is closer to the tip of the wind turbine blade. The tapered head may be shaped to match the shape of the interior surface of the wind turbine blade to allow the at least one bonding surface to contact the interior surface of the wind turbine blade.

The wedge insert may be formed of plastic to minimize friction.

The at least one bonding surface may comprise ribs for structural bonding.

The at least one anchor may comprise two eyebolts on the interior surface of the wind turbine blade to which the cable is tied.

The duct support may be less than 10cm or 4 inches in diameter. The cable may pass through the flexible duct through a pleat external to an airflow tube of the duct. The pleat may be a continuous tube. The pleat may comprise multiple sections.

Provided herein is a duct support device for installing and supporting a flexible duct in an interior of a wind turbine blade, the device comprising a duct support including at least one bonding surface, wherein the bonding surface may be glued to an interior surface of the wind turbine blade near a tip of the wind turbine blade and an eyelet, a cable, wherein the cable may be connected to a tip-most end of the flexible duct, the cable passes through the eyelet of the duct support, and the cable passes through the flexible duct, whereby the flexible duct can be retracted from or deployed to the tip of the wind turbine blade by pulling the cable in a respective direction.

Provided herein is a method of installing a duct support, for supporting a flexible duct, within a wind turbine blade, the method comprising passing a cable through an eyelet of a duct support, wherein the duct support includes at least one bonding surface, and wherein the cable is connected to a flexible duct at a first end and a second end passes through the eyelet and then through the flexible duct, pushing the duct support to a tip of the wind turbine blade, adhering at least one bonding surface of the duct support to an interior surface of the wind turbine blade at the tip of the wind turbine blade.

The duct support may comprise a wedge having an interior cavity configured to hold a volume of adhesive, and a plurality of adhesive channels connecting the interior cavity to an exterior of the wedge, wherein the exterior of the wedge includes the least one bonding surface and a wedge insert comprising the eyelet, wherein the wedge insert is configured to fit into the interior cavity of the wedge and to interlock with the wedge, wherein in a first position within the interior cavity of the wedge the wedge insert does not apply pressure to the adhesive, and in a second position within the interior cavity of the wedge, the wedge insert applies pressure within the interior cavity to force the volume of adhesive through the adhesive channels, and the method may further include placing the wedge insert within the wedge in the first position, injecting adhesive into the interior cavity of the wedge when the wedge insert is in the first position, wherein passing a cable through an eyelet of a duct support further includes passing the cable through the eyelet on the wedge insert, pushing the duct support to the tip of the wind turbine blade further includes pushing the interlocked wedge and wedge insert in the first position to the tip of the wind turbine blade; and adhering at least one bonding surface of the duct support to an interior surface of the wind turbine blade further includes moving the wedge insert from the first position to the second position to force adhesive out of the interior cavity and onto the at least one bonding surface.

Pushing the duct support to the tip of the wind turbine blade may further include pushing the duct support, in the first position, to contact an interior surface at a tip of the wind turbine blade, by a push rod and moving the wedge insert into the second position, by the push rod, to force the adhesive through the adhesive channels to the at least one bonding surface.

Provided herein is a method of moving a flexible duct supported by a duct support system within a wind turbine blade, wherein the duct support system includes a duct support adhered to an interior surface at the tip of the wind turbine blade, wherein a cable is connected to flexible duct at a first end, a second end of the cable is passed through an eyelet of the duct support, and the second end of the cable is passed through the flexible duct, the method comprising pulling the second end of the cable away from the tip of the wind turbine blade to move the flexible duct towards the tip of the wind turbine blade, and pulling the flexible duct away from the tip of the wind turbine blade to move the flexible duct away from the tip of the wind turbine blade.

Other aspects and features will become apparent to those ordinarily skilled in the art, upon review of the following description of some exemplary embodiments.

### Brief Description of the Drawings

The drawings included herewith are for illustrating various examples of articles, methods, and apparatuses of the present specification.
Figure 1 is schematic diagram of a wind turbine, in accordance with an embodiment;
Figure 2 is a schematic diagram of a wind turbine blade containing an example ice protection system with a flexible duct, in accordance with an embodiment;
Figure 3 is a schematic diagram of duct support system for a flexible duct of an ice protection system of a wind turbine, in accordance with an embodiment;
Figure 4 is a photograph of duct support and a rope attached to a flexible duct, in accordance with an embodiment;
Figure 5A is a top-down view of a wedge of a duct support, in accordance with an embodiment;
Figure 5B is a front view of a wedge of a duct support, in accordance with an embodiment;
Figure 5C is a cross sectional view through line A-A of Figure 5B, in accordance with an embodiment;
Figure 5D is a cross sectional view through line B-B of Figure 5B, in accordance with an embodiment;
Figure 6 is a schematic diagram of a duct support comprising a wedge and wedge insert with a rope connected to the wedge insert, in accordance with an embodiment;
Figure 7 is a schematic drawing of a duct support and a head of a push rod, in accordance with an embodiment;
Figure 8 is a cut view of a duct support, in accordance with an embodiment;
Figure 9 is a photograph of a duct support attached to a rope and a push rod, in accordance with an embodiment;
Figure 10A is a block diagram of a duct support system with a flexible duct in a fully deployed position, in accordance with an embodiment;
Figure 10B is a block diagram of the duct support system of Figure 9A in a partially retracted position, in accordance with an embodiment;
Figure 11 is a flow diagram of a method of installing a duct support system in a wind turbine blade, in accordance with an embodiment; and
Figure 12 is a flow diagram of a method of moving a flexible duct attached to a duct support system, in accordance with an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

The various embodiments described herein generally relate to ice protection methods and systems for a wind turbine blade. The present disclosure also provides systems and methods for mounting, installing, and supporting the ice protection system.

The systems and methods described herein provide an "ice protection" function for a wind turbine blade. "Ice protection" as used herein refers to protecting a wind turbine from negative effects of ice and includes "de-icing" and "anti-icing" functions. "De-icing" refers to the removal of ice from the wind turbine blade. "Anti-icing" refers to the prevention of ice formation on the wind turbine blade. That is, the ice protection systems of the present disclosure may be used to prevent ice from forming on a wind turbine blade and/or to remove ice that has already formed on a wind turbine blade. The ice protection system may include sensors which monitor environmental conditions of the wind turbine to turn on anti-icing functions, sensors which monitor the exterior of the wind turbine to turn on ice build-up removal, or both. The ice protection systems described herein protect the wind turbine from the negative effects of ice and may operate for both de-icing and anti-icing functions. The ice protection system may include sensors which monitor environmental conditions to compare historical weather events, forecasted weather events, or both in order to curtail the turbine, stop the turbine, set the turbine yaw position, set the turbine roll position, set the turbine pitch position, or any combination thereof with the final goal of reducing the amount of ice accumulation during an icing event, reducing the thermal load on the ice protection system, or both.

The duct support system described herein provides systems and methods for installing a flexible duct within a wind turbine blade, wherein the flexible duct is used within a wind turbine blade ice protection system to transmit heated air to the tip of the wind turbine blade and within the interior of the blade. Examples of a flexible duct are provided in US Patent No. 10,823,152 / EP3423712B to Roeper et al., and US Patent Application No. 20220195993 / EP4019767A to Roeper et al. which teach different methods of installing and supporting a duct. The specifics of the ice protection system are not described herein, however, the ice protection system may include heaters, blowers, sensors, processors, memories, etc. which are configured to monitor wind turbine blade conditions (both internally and externally) and provide heat through a flexible duct to heat the interior of the blade.

Discussed herein are components of a duct support system and installation methods for the components. It is to be understood that these installation practices may vary for different makes and models of wind turbines.

It is also to be understood that the installation process of the flexible duct and duct support system may occur at manufacture of the wind turbine or at other such time before deployment to a working location, at initial installation of the wind turbine at a working location, or as a retrofit of a wind turbine (i.e. of a wind turbine already in use). Different components may also be required based on when the system is installed.

Installation of the ice protection system may occur when a blade is grounded (e.g. about to be assembled onto the tower for the first time). Installation of the ice protection system may occur during blade manufacturing (e.g. before the top half of the blade is molded or before the bearing plate is attached). In such a case, the installer may have access to the inaccessible region of the blade (i.e. inaccessible when assembled) and may be able to install a system in this location which can aid in supporting a fabric duct.

It is to be understood that the order of the discussion about various components herein should not be taken as any indication as the order of installation or commissioning of the various components.

Herein, the duct support system supports flexible duct within a wind turbine blade. The duct support system includes a duct support comprising a wedge and a wedge insert, a push rod, a rope, and an anchor. The rope is attached to a tip end of the flexible duct, wherein the tip end is the end which is closest to the tip of the wind turbine blade (farthest from the central hub of the wind turbine), and passes through an interior of the flexible duct. The wedge insert has an eyelet, i.e. an opening, through which the rope also passes. The rope forms a large loop through the duct, through the eyelet, and back towards the hub of the wind turbine.

While herein, a "rope" is described, it is to be understood that the rope could be any cable capable of being connected to the duct, passed through the eyelet, and passed through the duct. For example, the cable could be a chain or a wire. A cable of a material which minimizes friction against other components, e.g., the duct, the eyelet, etc., is preferred.

The wedge includes an interior cavity to house the wedge insert and adhesive. The wedge insert is inserted into the interior cavity at the back end of the wedge (closest to hub when installed) and interlocked with the wedge in a first position. When the wedge and wedge insert are in the first position, adhesive is injected into the interior cavity of the wedge. The volume of the interior cavity with the wedge insert is in the first position is approximately equal to the amount of adhesive which is injected into the cavity. For example, if the cavity has a 50ml volume then the amount of adhesive injected would be 50ml. Plugs may be used within the duct support to prevent adhesive from extruding through the back of the wedge to the eyelet. In the first position, the wedge insert does not apply a force to the adhesive in the interior cavity and the push rod can push the interlocked wedge and wedge insert to the tip of the wind turbine blade. When the wedge is positioned at the tip of the wind turbine blade, the push rod twists the wedge insert into the second position and pushes the wedge insert such that the wedge insert moves further into the interior cavity and applies a force to the adhesive. The adhesive within the interior cavity is then ejected through adhesive channels or pores in the wedge to a bonding surface of the wedge which is in contact with or proximate to the interior of the wind turbine such that the adhesive bonds the wedge and the wind turbine blade together. The wedge and wedge insert are bonded together by adhesive which remains within the interior cavity when the wedge insert is moved into the second position.

When the adhesive is cured and the duct support is securely adhered to the interior of the wind turbine blade, at or close to the tip, the rope is tied to an anchor on the shear web or other interior surface of the blade on the hub side of the duct. The duct is supported by hanging on the rope which is secured to the duct support and to the anchor. In a preferred embodiment, the rope is threaded through the wedge insert before the wedge/wedge insert is deployed and glued onto the interior surface of the wind turbine blade. However, in other embodiments it may be possible to deploy the duct support to be adhered to the blade before the rope is deployed.

The duct can be pushed out towards or retracted back from the tip of the wind turbine blade by un-anchoring the rope and pulling on the rope or duct, similarly to a clothesline, to move the duct (or merely pulling on the rope or duct if the rope has not yet been anchored).

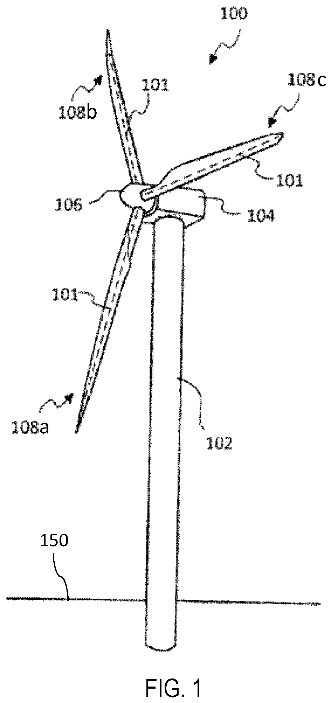

Reference will now be made to Figure 1 which provides brief overviews of the components of an example wind turbine and an example heating system disposed in a wind turbine blade.

Referring now to Figure 1, illustrated therein is a wind turbine 100 including an ice protection system 101. The wind turbine 100 is an example of a wind turbine which may employ a duct support system as described herein.

The wind turbine 100 is used to convert wind energy into electric energy. In an embodiment, the wind energy may be kinetic energy. In this embodiment, the wind turbine 100 may use a mechanical electrical generator to perform the energy conversion.

The wind turbine 100 includes a tower 102, a nacelle 104, a hub (main shaft portion) 106, and a plurality of blades 108a, 108b, 108c. The tower 102 of the wind turbine 100 is physically connected to surface 150. The surface 150 may be ground. Ice may accumulate on an exterior surface of the blades 108a/b/c.

The hub 106, which includes a main shaft portion, is coupled to a power transmission shaft (not shown) and rotatably disposed on the nacelle 104.

The nacelle 104 houses electrical and mechanical components of the wind turbine 100.

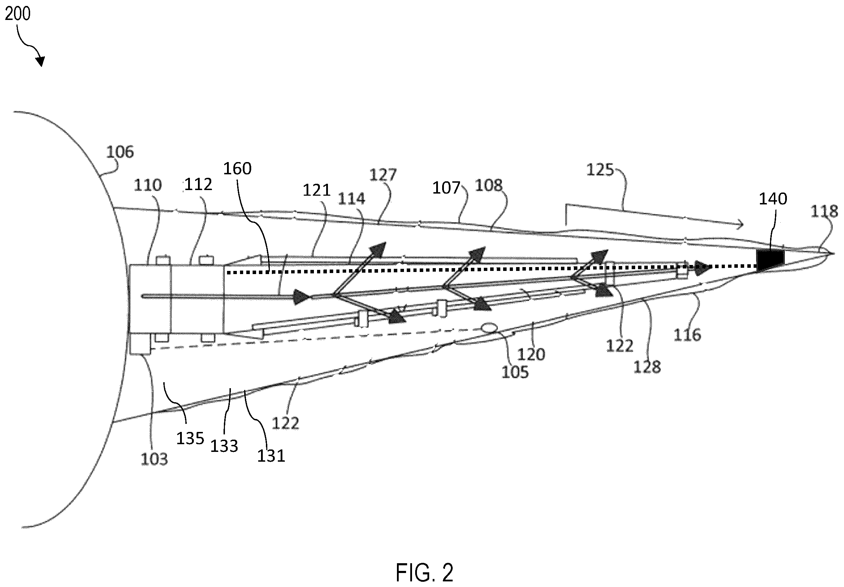

Referring now to Figure 2, shown therein is a cross-section schematic 200 of a wind turbine blade 108 containing an ice protection system, according to an embodiment. Wind turbine blade 108 is an example of a wind turbine blade which contains an ice protection system including a duct, and is therefore an example of a wind turbine blade and ice protection system which may require a duct support system and methods of installation thereof, as shown therein.

The ice protection system extends outwards from the hub 106 (i.e. from a proximal end of the wind turbine blade 108 towards a distal (or "tip") end of the wind turbine blade 108, where the terms proximal and distal refer to position relative to the hub 106).

The blade includes a trailing edge 127 and a leading edge 128. The trailing edge 127 is the edge of the blade 108 last encountered as the blade 108 rotates. The leading edge 128 of the blade 108 is the edge of the blade 108 first encountered as the blade rotates. The blade 108 includes a proximal end and a distal end. The proximal end is the end of the blade 108 closest to the hub 106. If a first component (of the ice protection system of a duct support system as described below) is referred to as proximally located relative to a second component, the first component is closer to the hub 106. The distal end is the end of the blade 108 farthest from the hub 106. If a first component is distally located relative to a second component, the first component is farther from the hub 106 than the second component.

The distal end 162 may include an inaccessible section 125 that is not reachable or accessible by a person for installation purposes. The inaccessible section 125 may include a solid segment that is filled with a solid material. The inaccessible section 125 may be hollow and obstructed to prevent access. The inaccessible section 125 may be too restricted in space or configuration to allow access. The inaccessible section 125 includes a blade tip 118 which is the most distal portion of the blade 108.

The blade 108 includes an interior and an exterior. The interior includes an interior cavity 131 bounded by an interior surface 133. The exterior includes an exterior surface 135 onto which ice 107 may accumulate.

In some embodiments, the blade 108 may contain one or more shear webs 121 or spars 122, referred to herein as shear web 121. The shear web 121 runs along the interior surface 133. The shear web 121 may terminate before the blade tip 118. The shear web 121 may be located along the trailing edge 127 or along the middle of the interior surface 133. The shear web 121 may provide a preferred location at which to attach components as it is a reinforced section of the blade 108 and therefore is likely to be able to accommodate the load from the added components. The shear web 121 is the second strongest part of the blade 108 after the bearing plate 250. As there may not be enough space to put all system components on the bearing plate 250, system components may be placed on the shear web 121. Heating system components may be isolated to the leading edge 128 side of the shear web 121 so that such components are as close possible to the critical icing area of the blade 108 (the tip third and leading edge of the blade). Components may be positioned on the trailing edge 127 side of the shear web 121 if there is not enough space on the leading edge 128 side of the shear web 121.

In some cases, the blade 108 may include two shear webs 121 side by side with a gap (e.g. 3" or larger) between the two shear webs 121 running parallel along the entire length of the blade 108. In some cases, one of the two shear webs 121 may stop before the second shear web does. The shear web 121 may end at some length down the blade 108. The separated cavities may or may not join together to create one cavity beyond termination of the shear web 121.

The trailing edge inaccessible region may or may not be further from or closer to the tip with respect to the leading edge inaccessible region. The spars 122 may also be of varying thicknesses along the length of their respective lengths. There may also be bulkheads which are perpendicular to the shear web 121 and occupy the entire leading edge cavity at cross sections of ~2 inches. The bulkhead may be foam sandwiched with fiberglass and glued into place. The bulkheads are not structural and can be removed. Also, the spars 122 may be joined into the airfoil surface through filleted fiberglass layers. Sections of the spar 122 may have lightning protection running through the spar 122 which interrupts mounting and should be avoided.

The blade portion of the ice protection system 101 (i.e. those components of the ice protection system 101 contained within the blade 108) may include a blower assembly 110 to move air throughout the blade 108, a heater assembly 112 to generate a heated airflow (arrows), a duct 114 for receiving the heated airflow and for releasing the heated airflow into the interior cavity 135 of the blade 108, and a control system 103 with sensors 105 to control the heating system (e.g. heater 137 and blower 139). Each ice protection system 101 also includes electrical and mounting components.

In some cases, the duct 114 may extend as far as possible to the tip of the blade 108. In some cases, the duct 114 may extend only to the end of the shear web 121.

The duct 114 may be a flexible duct. The flexible duct may be porous, perforated, meshed, permeable, impermeable, or nozzled. These features may be in clusters, a single row, or multiple rows, and direct heat towards the leading edge 128 and away from the spar 121. This may generate turbulence increasing internal heat transfer from the air to the surface. Shooting a jet of air perpendicular to the bulk air flow (aka cross-flow injection) can generate massive amounts of turbulence. Turbulence results in higher heat transfer coefficients, which means that the heat from the air transfers to the blade 108 surface quickly. It may be advantageous to shoot hot air at the bottom of a vertical plate to take advantage of natural surface convection.

As embodiments of the duct 114 using mesh have shown that the mesh may wear faster than the rest of the duct fabric, it may be preferable to have the duct 114 include perforations with a nozzle at the tip of the duct 114 pointing towards the blade 108 tip.

The duct 114 may be sectioned into a plurality of duct sections 120 which are joined together. The duct sections 120 may be joined together using any one or more of zippers, Velcro, buckles, or buttons. The duct 114 may be sectioned so that the duct 114 can be bundled into reasonable sizes for installation purposes. For example, the bundle may need to be small enough to pass through all the small access ports of the turbine 100. Further, the length of each duct section 120 may be limited such that the length is not longer than the accessible region of the blade 108.

The blade 108 portion of each ice protection system 101 is installed on the interior surface 133 of the interior cavity 135 of the blade 108 of the wind turbine 100. This installation may occur during manufacturing, at erection, or as a retrofit. Installation on inaccessible regions of the shear web 121 may be performed before such regions become inaccessible. During installation, the components of the ice protection system 101 are transported from the ground 150 and the location of the component's installation. During this transportation, the components may encounter limited space and accessibility conditions. The components and the pieces that make them up may be sized, shaped, or apportioned according to the most limiting encounter in order to accommodate installation.

In Figure 2, the duct is supported by a duct support as described herein. The duct support includes a wedge and wedge insert 140 which are glued onto the interior surface of the wind turbine blade 108. A rope 160 is connected to the tip end 118 of the duct 114, passed through an opening or eyelet of the duct support 140, and then passed through the duct 114 along the length of the duct 114 from the tip end 118 to the hub end. When the duct 114 is stationary, the rope 160 may be attached to at least one anchor on the interior surface 133 of the blade 108 or on the shear web 121. When the duct 114 needs to be moved, i.e., pulled back from the tip 118 or pushed out to the tip 118, the rope 160 can be pulled towards the hub to move the duct 114 to the tip 118, or the duct 114 can be pulled back towards the hub to move the duct 114 away from the tip 118, in a manner similar to a clothesline.

In Figure 2, the duct 114 is fully deployed to the tip 118 of the blade 108.

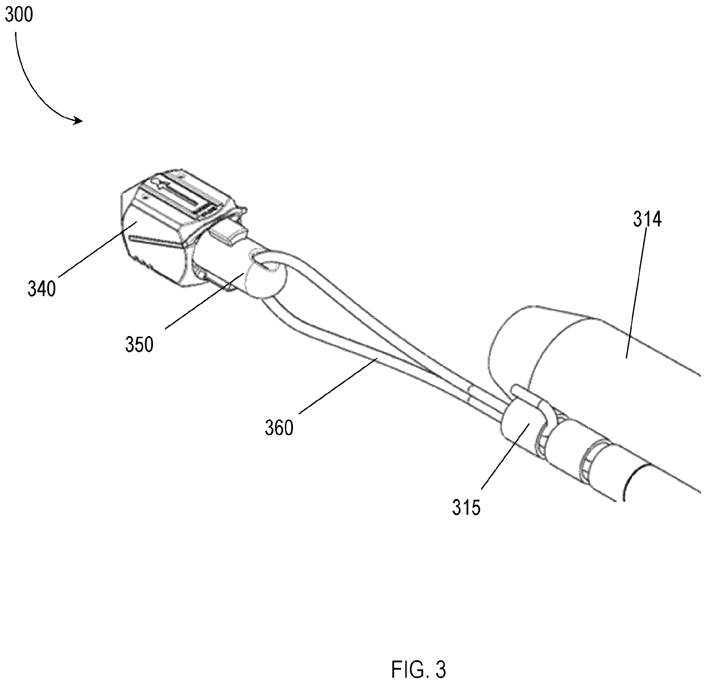

Figure 3 is a schematic diagram of duct support system 300 for a flexible duct 314 of an ice protection system of a wind turbine blade, in accordance with an embodiment.

The flexible duct 314 is part of an ice protection system which is installed or to be installed within an interior cavity of a wind turbine blade, as shown in Figure 2. The wind turbine blade has an inaccessible region at the distal or tip end of the blade, farthest from the hub, which is inaccessible by a human, and therefore requires a system and method for installing and using the flexible duct 314 which enables the duct 314 to be positioned and supported within the cavity at a distance from the human.

The duct support system 200 includes a duct support comprising a wedge 340 and a wedge insert 350, and a rope 360.

The duct 314 is attached to the rope 360 (e.g., tied) at a connection 315 which is at the tip end of the flexible duct 314. Rope 360 passes through an eyelet of wedge insert 350. Rope 360 also passes through duct 314. That is, the path of rope 360 begins at connection 315 where the rope 360 is connected to the duct 314, passes through the wedge insert 350, and then passes through the duct 314.

In other embodiments, the wedge insert may comprise a pulley instead of an eyelet. Any means both holding the rope and allowing the rope to move through the wedge insert could be used. However, the material of the wedge insert should cause minimal friction with the rope to avoid wear. For example, the material which contacts the rope may comprise a plastic, such as nylon.

In the embodiment of Figure 3, the rope 360 passes through the duct 314 in a pleat which is on the exterior of the duct relative to the interior cavity of the duct through which heated airflow is passed when the ice protection system is functioning. The pleat may be a continuous tube or may include sections of tube with breaks between the sections where the rope may be exposed. Passing the rope through a pleat instead of along the exterior of the duct reduces wear on rope.

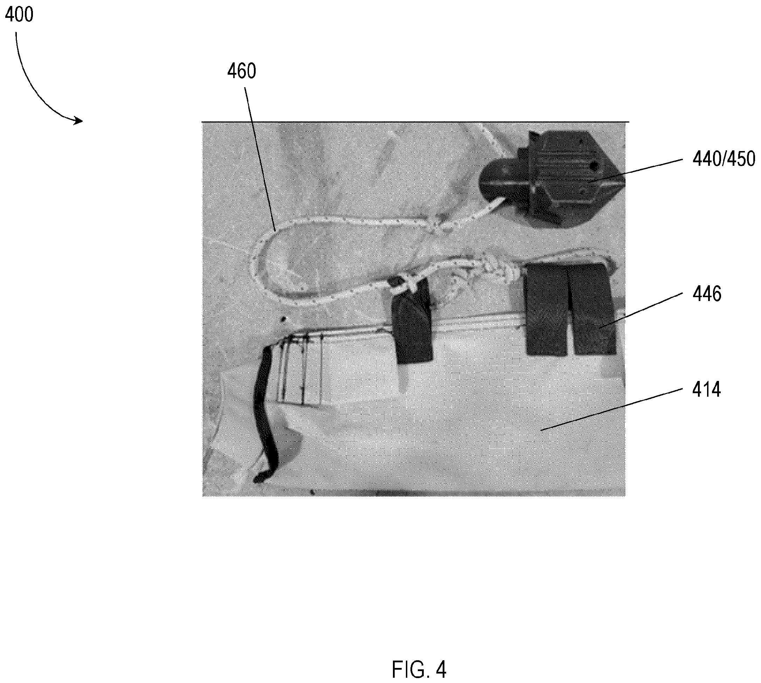

The connection 315 may include any means of connecting the rope 360 to the tip end of the duct 314, for example tying, gluing, sewing, etc. Figure 4 is a photograph 400 showing a rope 460 tied to three looped straps 446 (only one labelled) at the tip end of the duct 414, with the rope 360 also passing through a duct support 440/450.

When installed, the wedge 340 and wedge insert 350 are interlocked and a bonding surface of the wedge 340 is adhered to an interior surface of the wind turbine blade at, or near, the tip of the blade. The duct 314 is connected to the tip of the blade via the rope 360 which is connected to the duct 314 and to the wedge insert 350. The connection 315 of the duct 314 to the rope 360 and the path of the rope through the wedge insert 350 and the interior of the duct 314, allows the duct to be moved towards or away from the tip of the wind turbine blade like a clothespin on a clothesline. That is, to push the duct 314 towards the tip, the rope which has passed through the pleat (or interior) of the duct 314 is pulled towards the hub, away from the tip. To pull the duct 314 away from the tip, the duct 314 is pulled towards the hub.

When the duct 314 is not being moved the rope 360 is anchored. Anchoring the rope 360 may include tying the rope to a surface within the wind turbine blade. In an embodiment, the rope is tied to an anchor on a shear web of the wind turbine blade. The anchor may comprise a pair of eyebolts. The rope may be tied by a method which would allow the rope to "uncoil" if exposed to unexpected, extreme high forces.

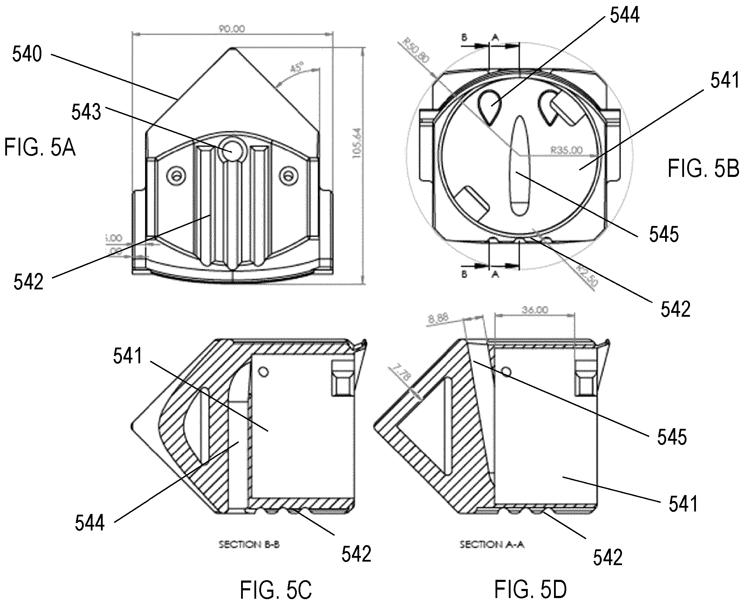

As described above, when installed, the duct support is glued to the interior of the wind turbine blade. The characteristics of the wedge which enable the duct support to be glued to the wind turbine blade are shown in Figures 5A-D.

Figure 5A is a side view of a wedge 540 of a duct support, in accordance with an embodiment. Figure 5B is a bottom view of the wedge 540 of Figure 5A with two cross-sectional lines A-A and B-B marked. Figure 5C is a cross sectional view through the wedge 540 at line A-A from Figure 5B. Figure 5D is a cross sectional view through wedge 500 at line B-B from Figure 5B. Figures 5A-D all show wedge 500 but only one of the Figures is labelled to reduce clutter.

The wedge 540 has a cube or rectangular prism shape with a tapered head. The tapered head of the embodiment of Figures 5A-D is at a 45° angle. The tapered head of the wedge 540 is the leading side of the wedge 540 when the wedge 540 is being installed within the wind turbine blade. The tapered head enables the wedge to move past any objects within the wind turbine blade by sliding along and past the objects, instead of abutting the objects if the wedge were flat (perpendicular to the direction of movement) at the leading side.

The profile of the wedge 540 and thereby the wedge insert 550 must allow the duct support to pass through wind turbine blade to the tip for installation. As described above, some wind turbine blades have bulkheads which need to be removed to allow access to the tip. Removal of bulkhead may include removing a very small portion of the bulkhead. For example, a 4" circle may be removed from each bulkhead and the duct support may need to be smaller than 4" to pass through the bulkheads to be installed at the tip.

While the wedge is shown herein with flat sides and a tapered head, in other embodiments, some or all of the sides of the wedge may be shaped to match a curvature of the specific wind turbine blade in which they are to be deployed to allow for better bonding with the blade.

Figure 5A shows a bonding surface 542 of the wedge 500. Bonding surface 542 is also shown at the bottom of Figures 5B-D. The bonding surface is the surface which is directly adhered to the interior surface of the wind turbine blade during installation. The number and location of bonding surfaces on the wedge will depend on the configuration of the specific wind turbine. That is, in some embodiments, there may be more than one bonding surface.

The bonding surface 542 includes an opening for an adhesive injection channel 543.

The bonding surface 542 of Figures 5A-D has a ridged or ribbed formation to increase the surface area for bonding of the wedge 540 to the blade.

Figure 5B shows a view from the bottom of the wedge 540 into the interior cavity 541 of the wedge 540. At the top of the interior cavity, there are holes for adhesive channels 544 (only one labelled) and 545. When pressure is applied to the adhesive in the interior cavity by moving the wedge insert from the first position to the second position and pushing the wedge insert further into the wedge, adhesive is extruded out of the adhesive channels 544 and 545.

Figure 5C shows adhesive channel 544s which deliver adhesive to the bonding surface 542. Figure 5D shows adhesive channel 545 which delivers adhesive to a bonding surface opposite bonding surface 542.

The diameter of the channels is equal (or approximately equal) to ensure that there is equal volumetric flow between all channels.

The position of the opening of the adhesive channels 544 at the top of the wedge prevent glue from flowing out of the channels 544 due to gravity.

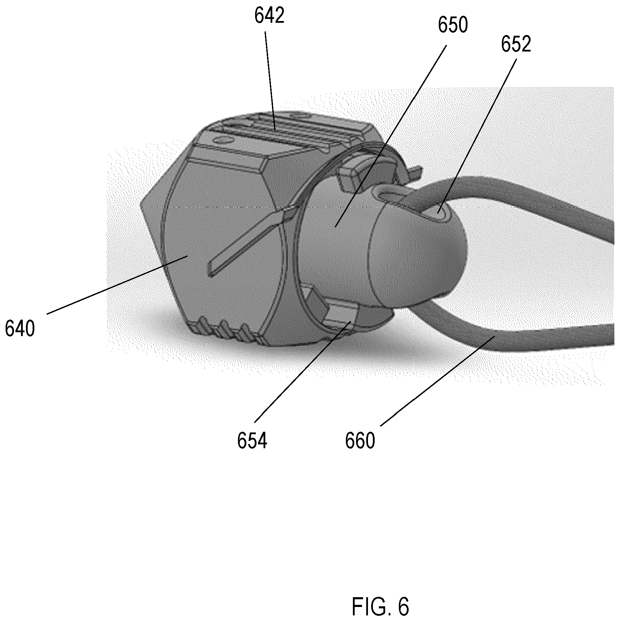

Figure 6 is a schematic drawing of a duct support with an attached rope, in accordance with an embodiment. Figure 6 shows a duct support which is similar to the duct support of Figure 3. In Figure 6, a wedge insert 650 is interlocked with a wedge 640 in a first position wherein the wedge insert is not applying any pressure to adhesive held within the interior cavity of the wedge 640.

A rope 660 is passed through an eyelet 652 of the wedge insert.

The wedge insert 650 includes insert positional blocks 652. In the first position, the insert positional blocks abut wedge positional blocks, such that the wedge insert 650 cannot be pushed further into the interior cavity to pressurize the adhesive unless the wedge insert 650 is twisted to move the insert positional blocks 652 away from the wedge positional blocks.

The wedge 640 includes a bonding surface 642 which will adhere to the interior surface of the wind turbine blade when adhesive is extruded from the interior cavity of the wedge 640.

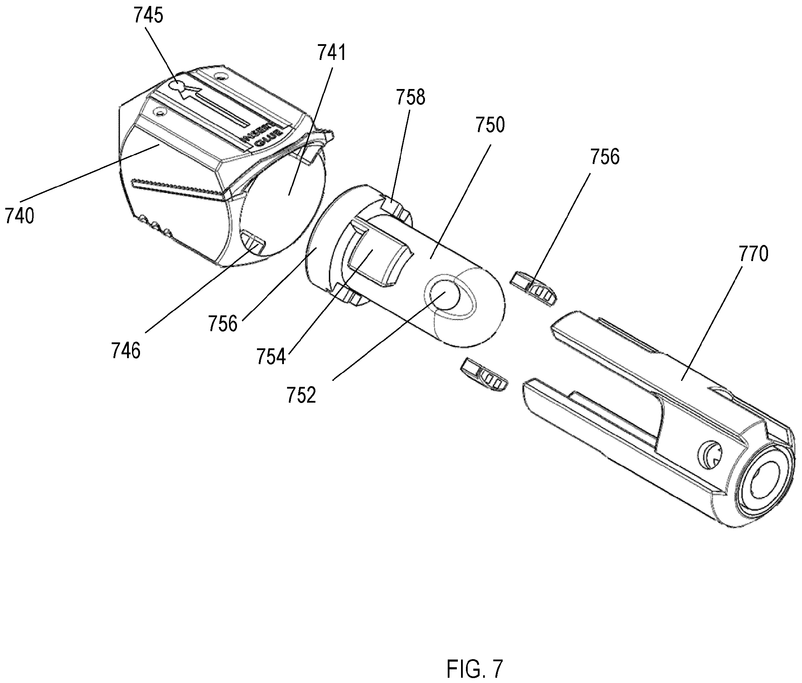

Figure 7 is a blown apart schematic drawing of a duct support and a head of a push rod 770, in accordance with an embodiment. The duct support includes wedge 740 and wedge insert 750, as well as plugs 756.

Only the head 770 of a push rod is shown in Figure 7, and in use the head would be attached to at least one section of rod.

The wedge insert 750 includes an eyelet 752 through which a rope will pass, insert positional blocks 754, and a ledge 756 with insert interlocking openings 758.

The wedge 740 includes a tapered head, a bonding surface, an interior cavity 741, and wedge positional blocks 746.

A diameter of the ledge 756 is just smaller than a diameter of the interior cavity 741 to allow the wedge insert 750 to be inserted into the interior cavity to seal the interior cavity 741.

The head 770 of the push rod is sized, shaped, and configured to detachably connect to the wedge insert 750. The head 770 may interlock with the wedge insert 750 or may merely be shaped to hold and/or grip the wedge insert 750 sufficiently to allow for pushing and twisting the wedge insert 750 to achieve duct installation.

When placing the wedge insert 750 into the wedge 740 for the first position, the insert interlocking openings 758 allow for the ledge 756 to be moved into the interior cavity 741 of the wedge 740 by moving the openings 758 over the wedge positional blocks 746. Once the openings 758 have moved past the wedge positional blocks 746, the wedge insert may be rotated to position the insert positional blocks 754 against the wedge positional block 746 to prevent movement of the wedge insert 750 further into the interior cavity of the wedge 740. This is the first position of the wedge insert 750. When the wedge insert 750 is in the first position, the wedge insert 750 cannot move into the wedge 740 past the front side (side closest to the tip when installed) of the insert positional blocks 754.

The wedge insert 750 may be inserted into the wedge 740 to the first position by a human. That is, the push rod is not involved in inserting the wedge insert 750 to the first position within the wedge 740.

The plugs 756 may be inserted into the insert interlocking openings 758 once the wedge insert 750 is in the first position to prevent adhesive from extruding back past the wedge insert 750 when glue is injected into the interior cavity 741 of the wedge 740.

When the wedge insert 750 is in the first position within the wedge 740 and the adhesive is injected into the interior cavity 741 of the wedge through an adhesive injection channel 745, the head 770 of the push rod is connected to the wedge insert 750 for pushing of the duct support to the tip of the wind turbine blade. Figure 7 does not show the rope or the duct which would be present.

The adhesive injection channel may be a channel which is also used for extruding adhesive onto a bonding surface of the wedge, of the adhesive injection channel may solely be used for adhesive injection and then plugged.

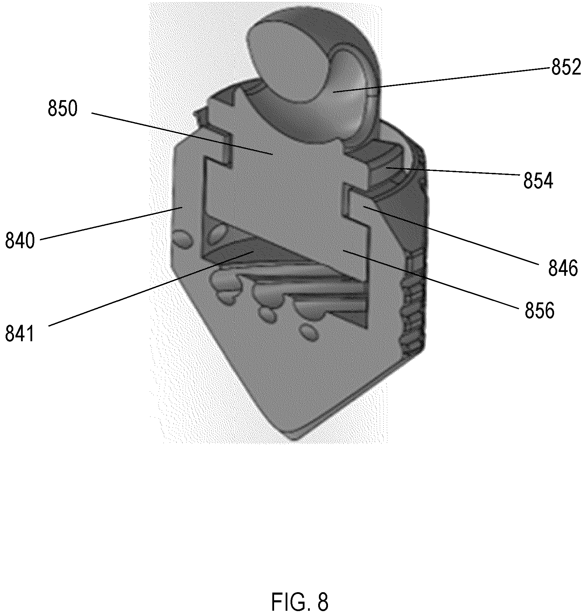

Figure 8 is a cut view of a duct support in the first position, in accordance with an embodiment. Figure 8 provides a view of how a wedge insert 850 interlocks with a wedge 840 when in the first position.

The wedge 840 includes an interior cavity 841 and wedge positioning blocks 846.

The wedge insert includes a ledge 856 with insert interlocking openings (not shown), insert positioning blocks 854 and an eyelet 852.

In Figure 8, the wedge insert 850 has been inserted into an interior cavity 841 of wedge 840. The insert interlocking openings (shown in Figure 7) are not visible in Figure 8, however, to insert the wedge insert 850 into the wedge 840 the insert interlocking openings must be lined up with the wedge positioning blocks 846 to allow the ledge 856 to move into the interior cavity 841. Once the wedge insert 850 has been moved into the interior cavity 841, the wedge insert 850 is rotated to position the insert positioning blocks 854 against the wedge positioning blocks 846. That is the wedge insert 850 "hooks" on to the wedge positioning blocks 846 such that ledge 856 prevent the wedge insert 850 from being removed from the wedge 840 and the insert positioning blocks 854 prevent the wedge insert 850 from being pushed further into interior cavity 841. Plugs are placed in the insert interlocking openings.

In other embodiments, other means of inserting the wedge insert into the wedge and holding the wedge insert in a first position wherein the wedge insert is not applying force to the adhesive may be used. That is, the positioning blocks, ledge, and interlocking openings of the present embodiment are an example, and other configurations may be used.

The remaining space in the interior cavity 841 which does not contain the wedge insert 850 can then be filled with adhesive through an adhesive injection channel.

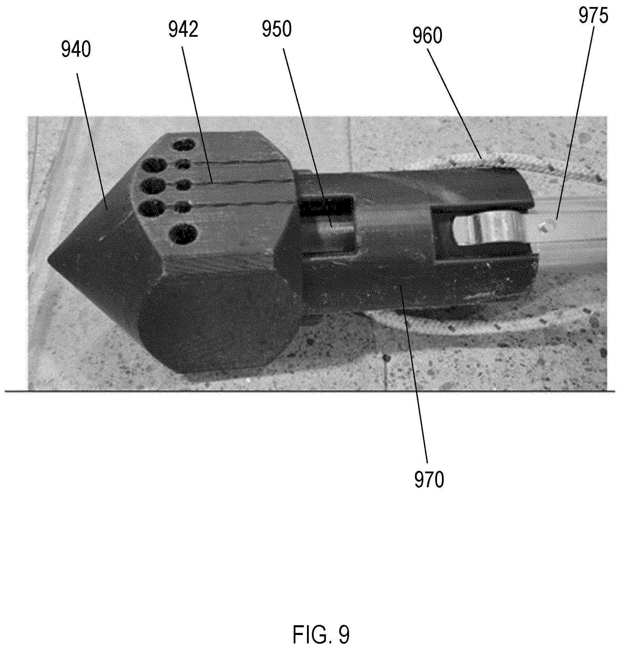

Figure 9 is a photograph of a duct support attached to a rope 960 and a push rod 975, in accordance with an embodiment.

The duct support includes a wedge 940 and a wedge insert 950. Rope 960 is passed through an eyelet of wedge insert 950. The push rod 975 is attached to the wedge insert 950 by push rod head 970.

The wedge 940 has a tapered head. The wedge 940 includes a bonding surface 942.

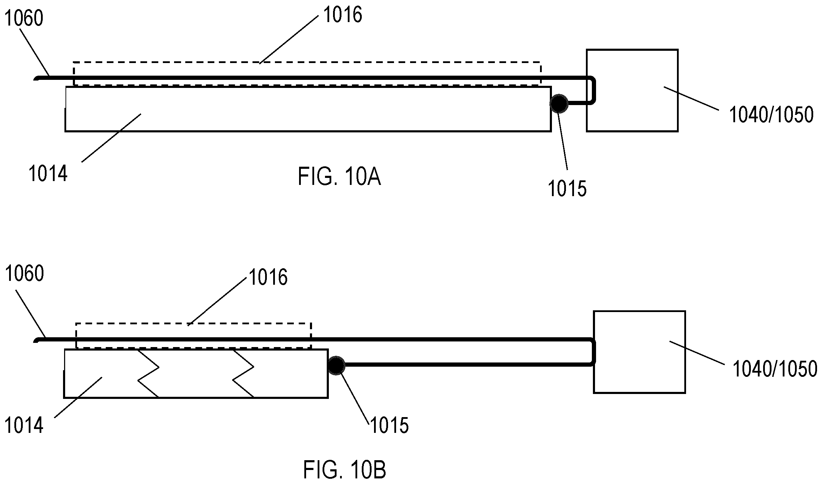

Figure 10A is a block diagram of a duct support system with a flexible duct in a fully deployed position and Figure 10B is a block diagram of the duct support system of Figure 10A in a partially retracted position, according to an embodiment.

In Figures 10A and 10B, the duct support system includes a duct support including a wedge 1040 and a wedge insert 1050. The duct support is adhered to an interior surface(s) of a wind turbine blade at or near the tip of the blade.

A rope 1060 passes through an eyelet of the wedge insert 1050 and a first end of the rope 1060 is connected to a flexible duct 1014 at a connection 1015. The second end of the rope 1060 passes through a pleat 1016 of the flexible duct 1014. The pleat 1016, as described above, forms a tube in one section or many sections, through which the rope 1060 passes along the length of the duct 1014.

The second end of the rope 1060 and the hub end of the flexible duct 1014 (the end which is closest to the hub when installing/installed/in use) are accessible by a human operator. When the duct 1014 is in a desired position, the human operator can secure the duct to an interior surface of the wind turbine blade by attaching the second end of the rope 1060 to at least one anchor. As the duct support 1040/1050 is adhered at the tip of the blade and the rope 1060 is passed through the duct 1014, the duct 1014 hangs from the rope 1060 when installed.

When the flexible duct 1014 needs to be moved, either deployed or retracted, the rope 1060 is freed from the anchor (if the rope was anchored).

To deploy the flexible duct 1014, that is, to move the tip end of the duct1014 towards the tip of the wind turbine blade, the human operator pulls the second end of the rope towards the hub.

To retract the flexible duct 1014, that is, to move the tip end of the duct away from the tip of the wind turbine blade, the human operator pulls the duct 1014 towards the hub.

When the flexible duct 1014 is in the desired position the rope 1060 can be anchored again (or for the first time).

Figure 10A shows the flexible duct 1014a in a fully deployed position wherein the tip of the duct 1014 is at the tip of the wind turbine blade. Figure 10B shows the flexible duct 1014 in a retracted position wherein the tip of the duct 1014 is not at the tip of the wind turbine blade. The zig-zag lines in duct 1014 in Figure 10B represent folding or bunching of the duct 1014.

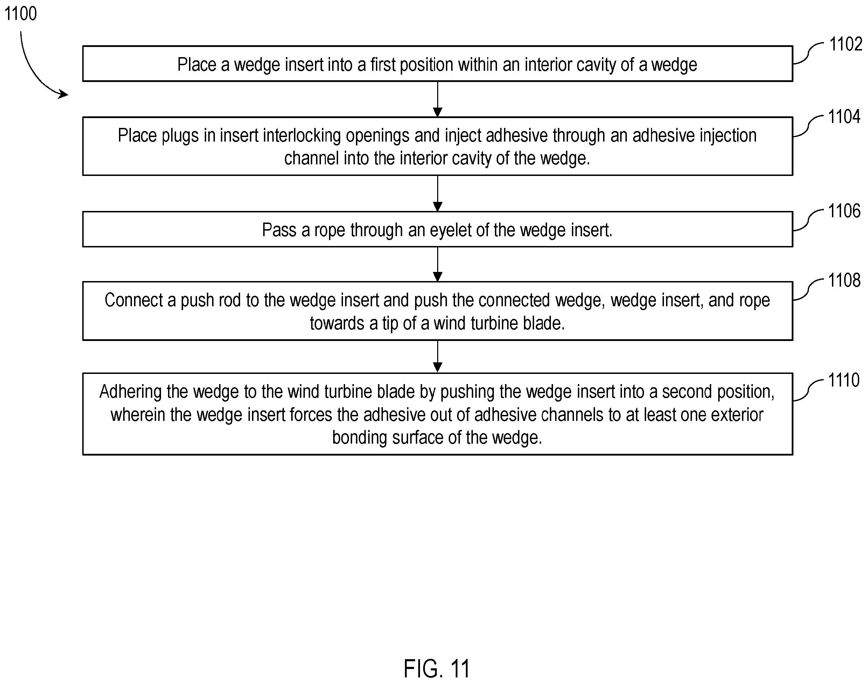

Figure 11 is a flow diagram of a method 1100 of installing a duct support system in a wind turbine blade, in accordance with an embodiment. The method 1100 is for installing a duct support comprising a wedge and a wedge insert as described above.

The wedge comprises a body having an interior cavity, a tapered head, and at least one bonding surface. The bonding surface is a surface of the wedge which will be adhered to the interior surface of a wind turbine blade near the tip of the blade. The interior cavity is sized and shaped to hold adhesive as well as to receive the wedge insert in a first position and a second position. Adhesive channels run from the interior cavity to the bonding surface.

The wedge insert comprises a body with a ledge which is sized and shaped to fit into the interior cavity of the wedge and an eyelet which is an opening through which a rope may be passed. The wedge insert includes insert interlocking openings in the ledge which allow the ledge to be inserted into the interior cavity and insert positioning blocks which enable the wedge insert to be held in the first position. In the first position, the wedge insert is only partially inserted into the interior cavity and together the wedge insert and wedge form an adhesive chamber which adhesive can be injected into through an adhesive injection channel. In the second position the wedge insert is pushed further into the interior cavity to displace the adhesive.

At 1102, the wedge insert is placed into the first position by aligning the insert interlocking openings on the wedge insert with wedge positioning blocks on the wedge, pushing the wedge into the interior cavity past the wedge positioning blocks, and rotating the wedge insert so that insert positioning blocks abut the wedge positioning blocks and prevent the wedge insert from moving further into the interior cavity.

As described above, in the first position the wedge and wedge insert form an adhesive chamber (the remaining part of the interior cavity which is not blocked by the wedge insert). At 1104, plugs are placed in the insert interlocking openings to block the openings to ensure that adhesive chamber is not open through the insert interlocking openings. Adhesive is injected into the adhesive chamber formed in the interior cavity through an adhesive injection channel. The adhesive injection channel may be the same channel as an adhesive channel which will deposit adhesive onto a bonding surface to adhere the wedge to the wind turbine blade or may be a dedicated adhesive injection channel. If the adhesive injection channel is only for injection, the channel may be plugged after adhesive is injected.

At 1106, a rope is passed through the eyelet of the wedge insert.

At 1108, a push rod is removably connected to the wedge insert and the wedge insert, wedge, and rope are pushed down the length of the wind turbine blade to the tip of the blade. The push rod may be connected to the wedge insert in any way which allows the push rod to push the wedge insert, twist the wedge insert relative to the wedge, and to be removed from the wedge insert from a distance. The rope is fed out as the wedge and wedge insert are pushed to the tip so that the rope is always accessible to an operator.

At 1110, the wedge is adhered to an interior surface of the wind turbine blade. When the wedge is touching or very close to the interior surface at the tip of the wind turbine blade (i.e., at the desired location for adhering the duct support to the blade), the push rod is used to twist wedge insert out of the first position and to push the wedge insert into the second position further in the interior cavity, thereby applying a force to the adhesive to cause the adhesive to extrude out of the adhesive channels onto the bonding surface. The adhesive connects the bonding surface to the interior surface of the wind turbine blade to form a permanent connection between the wedge and the wind turbine blade once the adhesive cures. The wedge insert may also be held within the wedge by the adhesive. In other embodiments, the interior cavity of the wedge may include a ridge or other blocking element which the wedge insert can move past when pushed by the push rod, but which prevents the wedge insert from being pulled back out of the wedge.

In one embodiment, a first end of the rope is connected to the tip end of a flexible duct and the second end of the rope is passed through the duct (e.g., through a pleat as described above) before the wedge and wedge insert are pushed to the tip of the wind turbine blade, so that the duct is deployed to the tip of the wind turbine blade at the same time as the duct support. In another embodiment, it is possible for only the wedge, wedge insert, and rope to be pushed to the tip and for the duct to be attached and deployed after the duct support is installed.

In the first embodiment, after the duct support is installed and the duct is positioned, the rope is attached to at least one anchor to hold the duct in place.

In the second embodiment, after the duct support is installed, the first end of the rope is attached to a connection at the tip end of the duct and the second end of the rope is passed through the duct. The second end of the rope is then pulled towards the hub so that the duct is pulled towards the tip of the blade. Once the duct is in place, the second end of the rope is attached to the anchor.

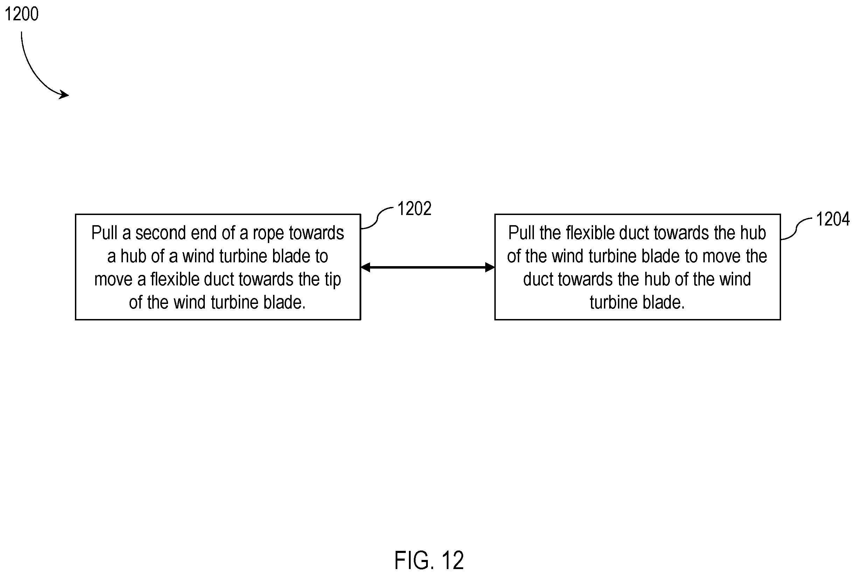

Figure 12 is a flow diagram of a method 1200 of moving a flexible duct attached to a duct support system as in method 1100, in accordance with an embodiment.

As discussed above, the duct support system described herein allows the flexible duct to be moved back and forth within the wind turbine blade like an object on a clothesline. Method 1200 describes how the flexible duct and be deployed and retracted. For method 1200, a duct support system is already installed in a wind turbine blade wherein a first end of a rope is connected to a tip end of flexible duct, the rope then passes through an eyelet of a wedge insert held within a wedge which is adhered to the wind turbine blade, and the rope then passes through the flexible duct back to a hub end of the flexible duct. The second end of the rope and the hub end of the duct are accessible by a human operator (or other operator, e.g., a robot operator), wherein the operator can pull the second end of the rope or the duct to affect the position of the duct.

At 1202, the second end of the rope is pulled towards the hub of the wind turbine blade to deploy the flexible duct to the tip of the wind turbine blade.

At 1204, the duct is pulled towards the hub to retract the flexible duct away from the tip of the blade toward the hub. When the duct is pulled towards the hub, the operator also needs to control the amount of rope that is being let out to provide enough slack for the duct to be retracted.

Management of the slack of the rope prevents any unnecessary contact of components of the duct support system with components within the wind turbine blade.

As described above, the second end of the rope may be secured to an anchor on an interior surface of the wind turbine blade, for example on a shear web. Therefore, before pulling the second end of the rope or pulling on the duct, the rope needs to be released from the anchor (if it was secured to the anchor), and after positioning the duct, the second end of the rope needs to be secured to the anchor.

While the above description provides examples of one or more apparatus, methods, or systems, it will be appreciated that other apparatus, methods, or systems may be within the scope of the claims as interpreted by one of skill in the art.

## Claims

1. A duct support system for installing and supporting a flexible duct in an interior of a wind turbine blade (108), the system comprising:
a flexible duct (114, 314) configured to receive a heated airflow and release the heated airflow into the interior of the wind turbine blade when installed;
a duct support (300) comprising:
a wedge (340) having an interior cavity (131) configured to hold a volume of adhesive, and a plurality of adhesive channels connecting the interior cavity to an exterior of the wedge, wherein the exterior of the wedge includes at least one bonding surface (135, 542, 642);
an wedge insert (140, 350) having an eyelet, wherein the wedge insert is configured to fit into the interior cavity of the wedge and to interlock with the wedge, wherein in a first position within the interior cavity of the wedge the wedge insert does not apply pressure to the adhesive, and in a second position within the interior cavity of the wedge, the wedge insert applies pressure within the interior cavity to force the volume of adhesive through the adhesive channels;
a push rod (975), to push the duct support (300), in the first position, to contact an interior surface at a tip of the wind turbine blade (108), and to move the wedge insert (350) into the second position to force the adhesive through the adhesive channels (544, 545) to the exterior of the wedge to adhere the at least one bonding surface to the interior surface of the wind turbine blade; and
a cable (360), wherein the cable is threaded through the eyelet (652, 752) of the wedge insert (140, 350) and through the flexible duct, wherein the cable is tied to the tip of the flexible duct, whereby after the duct support is adhered to the interior surface of the wind turbine blade (108), the flexible duct (114, 214) can be retracted or deployed by pulling the cable (360) in a respective direction.

2. The system of claim 1 further comprising at least one anchor disposed within the wind turbine blade to anchor the cable to the shear web of the wind turbine blade.

3. The system of claim 2 wherein the anchor is disposed on a shear web (121).

4. The system according to any one of claims 1 - 3, wherein the push rod (975) is further configured to interlock with the wedge insert.

5. The system according to any one of claims 1 - 4wherein the push rod twists the wedge insert (140, 350) to move the wedge insert from the first position to the second position.

6. The system according to any one of claims 1 - 5, wherein the adhesive is injected into the wedge (340) through at least one opening and, after the adhesive is injected, each opening of the at least one opening is closed with a plug (756).

7. The system according to any one of claims 1 - 6, wherein the push rod (975) is formed from sections, wherein sections are added and removed to change the length of the push rod.

8. The system according to any one of claims 1 - 7, wherein the wedge (340) further comprises wedge positioning blocks (846), and the wedge insert (850) further comprises insert positioning blocks, wherein in the first position the wedge positioning blocks and the insert positioning blocks abut and prevent the wedge insert from applying pressure to the adhesive.

9. The system of claim 8 wherein the wedge insert (140, 350) further comprises a ledge with insert interlocking openings, wherein the insert interlocking openings allow the wedge insert to be inserted into the interior cavity over the wedge positioning blocks, and wherein the ledge and insert positioning blocks form a cavity into which the wedge positioning blocks insert to hold the wedge insert in the first position.

10. The system according to any one of claims 1 - 9, wherein the wedge (540) has a tapered head wherein the wedge is smaller at a front end, wherein the front end is closer to the tip of the wind turbine blade.

11. The system of claim 10, wherein the tapered head is shaped to match the shape of the interior surface of the wind turbine blade to allow the at least one bonding surface to contact the interior surface of the wind turbine blade.

12. The system according to any one of claims 1 - 11, wherein the cable (360) passes through the flexible duct through a pleat external to an airflow tube of the duct.

13. A method of installing a duct support (300), for supporting a flexible duct, within a wind turbine blade (108), the method comprising:
passing a cable (360) through an eyelet of a duct support (300), wherein the duct support includes at least one bonding surface, and wherein the cable is connected to a flexible duct (314, 1014) at a first end and a second end passes through the eyelet and then through the flexible duct (1104);
pushing the duct support to a tip (118) of the wind turbine blade (108) (1108);
adhering at least one bonding surface of the duct support to an interior surface of the wind turbine blade at the tip of the wind turbine blade (1110).

14. The method of claim 13 wherein the duct support (300) further comprises:
a wedge (340) having an interior cavity (131) configured to hold a volume of adhesive, and a plurality of adhesive channels connecting the interior cavity to an exterior of the wedge, wherein the exterior of the wedge includes the least one bonding surface;
a wedge insert (140, 350) comprising the eyelet, wherein the wedge insert is configured to fit into the interior cavity of the wedge and to interlock with the wedge, wherein in a first position within the interior cavity the wedge insert does not apply pressure to the adhesive, and in a second position within the interior cavity of the wedge, the wedge insert applies pressure within the interior cavity to force the volume of adhesive through the adhesive channels; and
wherein the method further includes:
placing the wedge insert (140, 350) within the wedge (340) in the first position;
injecting adhesive into the interior cavity (131) of the wedge when the wedge insert is in the first position;
and wherein:
passing a cable (340) through an eyelet of a duct support further includes passing the cable through the eyelet (652, 752) on the wedge insert;
pushing the duct support to the tip of the wind turbine blade further comprises pushing the interlocked wedge and wedge insert in the first position to the tip of the wind turbine blade; and
adhering at least one bonding surface of the duct support to an interior surface of the wind turbine blade further includes moving the wedge insert from the first position to the second position to force adhesive out of the interior cavity and onto the at least one bonding surface.

15. The method of claim 14 wherein pushing the duct support (300) to the tip of the wind turbine blade further includes:
pushing the duct support, in the first position, to contact an interior surface at a tip of the wind turbine blade, by a push rod (975); and
moving the wedge insert (140, 350) into the second position, by the push rod, to force the adhesive through the adhesive channels to the at least one bonding surface.
